# EUROPEAN PATENT APPLICATION

(11) **EP 3 444 398 A1**
(43) Date of publication of application: **20.02.2019**
(21) Application number: 16898300.5
(22) Date of filing: 06.05.2016
(51) Int. Cl.: D06M 15/643

(54) **SILICON SILK WADDING PRODUCT AND PREPARATION METHOD THEREFOR**

(30) Priority: 15.04.2016 CN 201610236476
(71) Applicant: Guangdong Polysil Technology Co., Ltd., Torch Development Zone Zhongshan, Guangdong 528400 (CN)
(72) Inventor: MA, Hanyong, Zhongshan Guangdong 528400 (CN); WU, Chao, Zhongshan, Guangdong 528400 (CN); CHEN, Youbin, Zhongshan, Guangdong 528400 (CN)
(74) Representative: Cabinet Netter
(86) International application number: PCT/CN2016/081255
(87) International publication number: WO 2017/177483

(57) **Abstract**

A silicon silk wadding product and a preparation method thereof. The silicon silk wadding product comprises a meshed chemical fiber wadding base 2 formed by compressing or weaving chemical fibers 1. A silicone layer 3 covering the surfaces of the chemical fibers 1 permeates the interior and exterior of the chemical fiber wadding base 2. Liquid silicone rubber penetrates into the meshed structure of the chemical fiber wadding base 2, adheres to all the chemical fibers 1, and is cured into a silicone elastomer, thereby effectively improving the resilience and lasting resistance to deformation of the chemical fiber wadding. Some of meshes of the chemical fiber wadding base 2, i.e., small meshes 22, are filled and sealed with the silicone layer, but the ventilation property of large meshes 21 is retained, so that the thermal insulation property of the meshed chemical fiber wadding base 2 is reduced but the permeability thereof is improved.

## Description

### FIELD OF THE INVENTION

The present invention relates to a silicon silk wadding product and a preparation method thereof, and belongs to the technical field of daily consumer product manufacture.

### BACKGROUND OF THE INVENTION

There are many products made of various chemical fiber materials (chemical fibers) in the market. Most of products are prepared by blending chemical fiber materials with different characteristics first, and then formed into different shapes and characteristics through compression and shaping. Examples of such products include bras, pillows and mattresses, etc. Such products have the advantages of being environment-friendly, lightweight (with specific gravity being only 30-50% of ordinary sponge), high in air permeability (with air permeability being 3-5 times higher than sponge), and capable of being exposed to sunlight for sterilization, etc. Since many consumers have started to realize the harm of polyurethane sponge to the human body, they tend to choose elastic products made of chemical fiber materials.

However, the disadvantages of such products made of chemical fiber materials through compression and shaping are also prominent. Due to the fact that chemical fibers are only subjected to compression and then high-temperature shaping, there is no fixation through chemical reaction, and shape preserving is achieved only through the compression recoverability of chemical fibers, the resilience of such products is not good, and deformation is likely to occur after long-term compression or long-term use. For example, mattress products made of polyester fibers are usually deformed after one year of use, and cannot be recovered, thus losing the use value. Besides, chemical fiber materials are more likely to disperse, deform and lose supporting resilience after washing. For example, bras made of polyester fibers, commonly known as vertical cotton bras, deform after just a few times of washing, thus losing the use value.

There are many organic silicon-treated chemical fiber materials and fabrics in the market, and there are also many scientific reports on the technology of using organic silicon to treat chemical fiber materials. However, these products and technologies all use silicone oil or silane coupling agents containing reactive groups such as amino, hydroxyl and so on , the surfaces of the chemical fibers are treated during chemical fiber drawing and manufacturing, and the reactive groups, such as amino and hydroxyl in the treating agents are made to react with hydroxyl and other groups on the surfaces of the chemical fiber materials, so as to improve the hydrophobicity of the chemical fiber materials and reduce the friction force on the surfaces of the chemical fiber materials, thus improving the tactility and resilience of the chemical fiber materials. The characteristics of such processing technologies are as follows:
1. the amount of the organic silicon treating agents used in the technologies is very small, usually less than 10% of the weight of the chemical fiber materials;
2. the organic silicon treating agents in the technologies all react with the chemical fiber materials, but the organic silicon treating agents are not cross-linked with each other and cannot form an elastic silicone layer.

The above chemical fiber treatment technologies are not obviously helpful in solving the problems of poor resilience and deformation after long-term use of chemical fiber products.

The present invention is put forward based on the deficiencies of the above product and the prior art.

### SUMMARY OF THE INVENTION

It is an object of the present invention to overcome the defects of the prior art and provide a silicon silk wadding product which is environment-friendly, lightweight, high in physical property and high in air permeability.

Another object of the present invention is to provide a preparation method of the above silicon silk wadding product.

In order to achieve the above object, the present invention adopts the following technical solution:
A silicon silk wadding product is characterized by comprising a meshed chemical fiber wadding base formed by compressing or weaving chemical fibers, wherein a silicone layer covering the surfaces of the chemical fibers permeates the interior and exterior of the chemical fiber wadding base.

In the present application, some of meshes of the chemical fiber wadding base are filled and sealed with the silicone layer. Microfibril filaments on the surfaces of the chemical fibers can block air flow (the same principle as cotton insulation), which is the main reason why the heat of existing chemical fiber products cannot be dissipated easily. In the process of entering a chemical fiber material, a silicone solution can comb and bond the microfibril filaments on the surface of the chemical fiber material, the fine meshes are blocked and bonded, and the large meshes are unobstructed and free of microfibril, so that air permeability is improved. After being treated in this way, a product can have a much better heat dissipation property.

In the present application, the weight ratio of the chemical fiber wadding base to the silicone layer is 1:0.2-4.

Preferably, the weight ratio of the chemical fiber wadding base to the silicone layer is 1 : 0.3-3. The weight of the silicone layer refers to the weight of a gel layer after liquid silicone is cured and formed. If the weight of the silicone layer is less than 20% of the weight of fiber filaments, due to the small amount of silicone, silicone can only bond with the chemical fibers, but cannot cross-link into a meshed structure by itself. The silicone layer can only make a product have hydrophobicity, but cannot provide the product with resilience and recoverability. If the weight of the silicone layer exceeds 4 times of the weight of the chemical fiber material, the air-permeable meshed structure of the original fiber filaments is likely to be blocked because of too much silicone, thus reducing the air permeability of the product.

In the present application, the silicone layer is formed by impregnating the chemical fiber wadding base with an addition-cured liquid silicone rubber (hereinafter simply referred to as silicone) with a Shore hardness of 15-70 degrees and then conducting curing. The hardness is the hardness of silicone after curing. The silicone is a blend of vinyl silicone oil, a reinforcing material, hydrogen-containing silicone oil and platinum. Silicone with different hardness is selected to treat the chemical fiber wadding base, and under the condition of the same amount of silicone, silicon silk wadding products with different hardness and resilience can be obtained. The silicone selected by the invention allows crosslinking reaction between a hydrogen-containing group in the silicone and a hydroxyl group on the surfaces of the chemical fibers through platinum catalysis while self-curing and crosslinking are achieved, so that the two elastomers are tightly combined. Moreover, the meshed structure of the silicone layer formed by this reaction has the best resilience and can provide the product with better support and resilience.

The operating viscosity of the silicone when infiltrating the chemical fiber wadding base is less than or equal to 150 mPa.s, and the silicone can be diluted by a solvent or emulsified by water to the operating viscosity. Only the silicone solution with the operating viscosity less than or equal to 150 mPa.s can enter the meshed structure of the chemical fiber material uniformly, and after the solvent or water is evaporated, a silicone molecular chain shrinks and adheres to the chemical fiber material and does not block air holes. When the viscosity is too high, the silicone solution will block the meshes, making it not easy to permeate evenly into the meshed structure of the chemical fibers, thus unable to uniformly adhere to all the fibers.

According to the invention, after the chemical fiber wadding base is infiltrated with the silicone solution with a specific viscosity, the silicone solution enters the interior of the product, the silicone layer is attached between the surfaces of the chemical fibers inside and outside the product and the meshed structure, and vinyl silicone oil and hydrogen-containing silicone oil in the silicone itself are catalytically cross-linked through platinum to form a meshed elastic structure. The distribution uniformity of the silicone in the product is adjusted by adjusting the operating viscosity of the silicone solution.

The preparation method of the silicon silk wadding product is characterized by comprising the steps of:
a, compressing or weaving chemical fibers into a required product shape first to obtain a chemical fiber wadding base;
b, diluting silicone with a solvent or emulsifying the silicone with water to obtain a silicone solution with a suitable operating viscosity, and then infiltrating the chemical fiber wadding base with the silicone solution to enable the silicone solution to uniformly enter the interior and exterior of the shaped chemical fiber wadding base; and
c, discharging the excess silicone solution in meshes by extrusion till only a proper amount of organic silicon adheres to the surfaces of the chemical fibers, then heating a product to evaporate the solvent or water, and curing and crosslinking the silicone to form a meshed elastic structure of the organic silicon.

When the excess addition-cured liquid silicone solution is extruded and removed, a pressing roller extrusion or die extrusion method is used to treat the product which has been infiltrated with the silicone solution but has not undergone thermal curing. The amount of the silicone in a chemical fiber structure is controlled according to the degree of extrusion, and product indexes such as resilience, air permeability and hardness are adjusted.

Compared with the prior art, the silicon silk wadding product has the following advantages:
through a cross-border design and manufacturing process, the silicon silk wadding product has two layers of completely synchronous meshed elastic structure, the chemical fiber elastic structure provides sufficient strength to the silicone structure, making the silicone elastic structure with low tensile and tear strength but excellent resilience not likely to be damaged, and the silicone elastic structure provides sufficient resilience and shaping stability to the chemical fiber structure. The defect that chemical fiber products are likely to deform after being compressed for a long time, used for a long time and washed is solved.

Liquid silicone rubber in the present invention penetrates into the meshed structure of the chemical fiber wadding base, adheres to all the chemical fibers, and is cured into a silicone elastomer, thereby effectively improving the resilience and lasting resistance to deformation of the chemical fiber wadding. In the present invention, some of the meshes of the chemical fiber wadding base, i.e., small meshes, are filled and sealed with the silicone layer, but the ventilation property of large meshes is retained, so that the thermal insulation property of the meshed chemical fiber wadding base is reduced but the permeability thereof is improved.

### BRIEF DESCRIPTION OF THE DRAWINGS

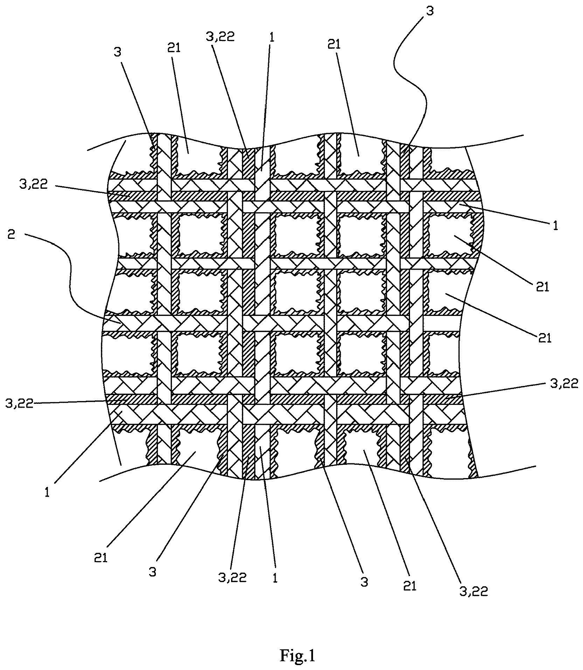

Fig. 1 is a section view of a single-layer meshed structure of the invention.

### DETAILED DESCRIPTION OF THE EMBODIMENTS

The invention will be described in further detail as below with reference to the drawings.

As shown in Fig.1, a silicon silk wadding product comprises a meshed chemical fiber wadding base 2 formed by compressing or weaving chemical fibers 1, wherein a silicone layer 3 covering the surfaces of the chemical fibers 1 permeates the interior and exterior of the chemical fiber wadding base 2. The chemical fiber wadding base 2 is compressed into a meshed structure from a plurality of chemical fibers 1 and shaped into a desired shape. Then the chemical fiber wadding base 2 is impregnated with a silicone solution to allow the silicone solution to permeate into the meshed structure and cover all the chemical fibers 1, and the silicone layer 3 is formed after curing, so that the chemical fiber wadding base 2 becomes a silicon silk wadding product.

The meshed structure covered with the silicone layer 3 and the meshed structure of the chemical fiber wadding base 2 form a completely synchronous double-mesh elastic structure which is not a laminated double-mesh structure. The silicone layer 3 firmly adheres to a surface layer of each chemical fiber 1 and adheres to the junctions of the chemical fibers 1, so that the chemical fiber wadding base 2 becomes a framework of the silicon silk wadding. The silicone layer 3 gives the framework a high degree of elasticity. Together they improve the resilience and deformation resistance of the silicon silk wadding product.

The meshed structure formed by compressing a plurality of chemical fibers 1 irregularly forms large meshes 21 and small meshes 22. Some of the meshes of the chemical fiber wadding base 2 are filled and sealed with the silicone layer 3 in the chemical fiber wadding base 2, the filled and sealed meshes are smaller than those which are not filled and sealed, i.e., the small meshes 22 are filled and sealed and the large meshes 21 are still air-permeable, so that the thermal insulation property of the small meshes in the meshed structure can be reduced, the permeability of the large meshes in the meshed structure is retained, and then the permeability of the silicon silk wadding product is improved.

The silicon silk wadding product is prepared by the process of:
firstly, compressing or weaving the chemical fibers 1 (i.e. chemical fiber material) into a desired product shape, wherein at this point, the meshed structure of the chemical fiber wadding base 2 of the product is established;
secondly, diluting addition-cured liquid silicone rubber (hereinafter simply referred to as silicone) with a solvent or emulsifying the silicone with water to obtain the silicone solution with a suitable operating viscosity, then infiltrating the chemical fiber wadding base 1 with the silicone solution to enable the silicone solution to uniformly enter the interior and exterior of the shaped chemical fiber wadding base 1, discharging the excess silicone solution in the meshes by extrusion till only a proper amount of silicone adheres to the surfaces of the chemical fibers 1, then heating the product to evaporate the solvent or water, and curing and crosslinking the silicone to form the meshed elastic silicone layer.

The meshed elastic structure of the silicone layer is completely the same as that of the original chemical fiber wadding base which is compressed and shaped.

### Embodiment 1:

a, The chemical fibers was compressed into a chemical fiber board with a density of 6 kg/m³, a thickness of 6 cm and a resilience of 8%. The chemical fiber board was cut into a suitable size, put into a pillow mold with a temperature of 190°C, pressed for 5 minutes with a plate vulcanizing machine, taken out and cooled, and shaped into the shape of a pillow. (pillow 1)
b, The shaped pillow 1 was infiltrated with a silicone solution with an operating viscosity of 20 mPa.S (the hardness of silicone was Shore A: 20 degrees), taken out after 1 minute, placed for 5 minutes to allow excess solution to flow out, rolled with a calendering roller to discharge excess organic silicon solution. The remaining amount of the silicone solution could be adjusted by adjusting the rolling pressure.
c, The treated pillow was put into an oven, baked at 120°C for 30 minutes, and taken out. (pillow 2)

During the experiment, the performance of pillow 1 and pillow 2 was tested, and the results were shown in Table 1:

**Table 1:**

| Category | Weight | Hardness (Shore F) | Resilience | Compression deformation |
|---|---|---|---|---|
| (pillow 1) | 180 g | 12 degrees | 8% | 55% |
| (pillow 2) | 300 g | 14 degrees | 18% | 22% |
| Difference | +120 g | +2 degrees | +10% | -33% |

Compression deformation was tested by (according to ISO1856 method A) compressing the sample by 50% at 70°C for 22 hours and then taking out, placing at room temperature for 30 minutes, and calculating the deformation amount.

### Embodiment 2:

The preparation conditions and parameters of Embodiment 2 were the same as those of Embodiment 1. The hardness of the addition-cured liquid silicone was selected to be Shore A: 50 degrees. The test method was also the same as that of Embodiment 1, and the results were shown in Table 2.

**Table 2:**

| Category | Weight | Hardness (Shore F) | Resilience | Compression deformation |
|---|---|---|---|---|
| (pillow 1) | 180 g | 12 degrees | 8% | 55% |
| (pillow 2) | 300 g | 17 degrees | 25% | 15% |
| Difference | +120 g | +5 degrees | +17% | -40% |

### Embodiment 3:

The preparation conditions and parameters of Embodiment 3 were the same as those of Embodiment 1. The hardness of the addition-cured liquid silicone was selected to be Shore A: 70 degrees. The test method was also the same as that of Embodiment 1, and the results were shown in Table 3.

**Table 3:**

| Category | Weight | Hardness (Shore F) | Resilience | Compression deformation |
|---|---|---|---|---|
| (pillow 1) | 180 g | 12 degrees | 8% | 55% |
| (pillow 2) | 300 g | 21 degrees | 20% | 25% |
| Difference | +120 g | 9 degrees | +12% | -30% |

### Embodiment 4:

The preparation conditions and parameters of Embodiment 4 were the same as those of Embodiment 1 except that the operating viscosity of the silicone solution was 80 mPa.S (the hardness of the silicone was Shore A: 20 degrees). The test method was also the same as that of Embodiment 1, and the results were shown in Table 4.

**Table 4:**

| Category | Weight | Hardness (Shore F) | Resilience | Compression deformation |
|---|---|---|---|---|
| (pillow 1) | 180 g | 12 degrees | 8% | 55% |
| (pillow 2) | 370 g | 16 degrees | 23% | 20% |
| Difference | +190 g | +4 degrees | +15% | -35% |

### Embodiment 5:

The preparation conditions and parameters of Embodiment 5 were the same as those of Embodiment 1 except that the operating viscosity of the silicone solution was 150 mPa.S (the hardness of the silicone is Shore A: 20 degrees). The test method was also the same as that of Embodiment 1, and the results were shown in Table 5.

**Table 5:**

| Category | Weight | Hardness (Shore F) | Resilience | Compression deformation |
|---|---|---|---|---|
| (pillow 1) | 180 g | 12 degrees | 8% | 55% |
| (pillow 2) | 480 g | 18 degrees | 22% | 16% |
| Difference | +300 g | +6 degrees | +18% | -39% |

### Embodiment 6:

The preparation conditions and parameters of Embodiment 6 were the same as those of Embodiment 1 except for the weight of the silicone layer. The test method was the same as that of Embodiment 1, and the results were shown in Table 6.

**Table 6:**

| Category | Weight | Hardness (Shore F) | Resilience | Compression deformation |
|---|---|---|---|---|
| (pillow 1) | 180 g | 12 degrees | 8% | 55% |
| (pillow 2) | 216 g | 12 degrees | 12% | 35% |
| Difference | +36 g | +0 degree | +4% | -20% |

### Embodiment 7:

The preparation conditions and parameters of Embodiment 7 were the same as those of Embodiment 1 except for the weight of the silicone layer. The test method was the same as that of Embodiment 1, and the results were shown in Table 7.

**Table 7:**

| Category | Weight | Hardness (Shore F) | Resilience | Compression deformation |
|---|---|---|---|---|
| (pillow 1) | 180 g | 12 degrees | 8% | 55% |
| (pillow 2) | 234 g | 13 degrees | 13% | 30% |
| Difference | +54 g | +1 degree | +5% | -25% |

### Embodiment 8:

The preparation conditions and parameters of Embodiment 8 were the same as those of Embodiment 1 except for the weight of the silicone layer. The test method was the same as that of Embodiment 1, and the results were shown in Table 8.

**Table 8:**

| Category | Weight | Hardness (Shore F) | Resilience | Compression deformation |
|---|---|---|---|---|
| (pillow 1) | 180 g | 12 degrees | 8% | 55% |
| (pillow 2) | 540 g | 20 degrees | 30% | 14% |
| Difference | +360 g | +8 degrees | +22% | -41% |

### Embodiment 9:

The preparation conditions and parameters of Embodiment 9 were the same as those of Embodiment 1 except for the weight of the silicone layer. The test method was the same as that of Embodiment 1, and the results were shown in Table 9.

**Table 9:**

| Category | Weight | Hardness (Shore F) | Resilience | Compression deformation |
|---|---|---|---|---|
| (pillow 1) | 180 g | 12 degrees | 8% | 55% |
| (pillow 2) | 720 g | 23 degrees | 34% | 10% |
| Difference | +540 g | +11 degrees | +26% | -45% |

### Embodiment 10

The preparation conditions and parameters of Embodiment 10 were the same as those of Embodiment 1 except for the weight of the silicone layer. The test method was the same as that of Embodiment 1, and the results were shown in Table 10.

**Table 10:**

| Category | Weight | Hardness (Shore F) | Resilience | Compression deformation |
|---|---|---|---|---|
| (pillow 1) | 180 g | 12 degrees | 8% | 55% |
| (pillow 2) | 360 g | 15 degrees | 22% | 20% |
| Difference | +180 g | +3 degrees | +14% | -35% |

## Claims

1. A silicon silk wadding product, **characterized by** comprising a meshed chemical fiber wadding base formed by compressing or weaving chemical fibers, wherein a silicone layer covering the surfaces of the chemical fibers is formed by the interior and exterior of the chemical fiber wadding base through infiltration and permeation to form two layers of completely synchronous mesh elastic structures, the weight ratio of the chemical fiber wadding base to the silicone layer is 1:0.3-3, some of meshes of the chemical fiber wadding base are filled and sealed with the silicone layer.

2. The silicon silk wadding product according to claim 1, **characterized in that** the chemical fiber wadding base is bra or mat, wherein the thickness of the bra is 2-10mm.

3. The silicon silk wadding product according to claim 1, **characterized in that** the silicone layer is formed by impregnating the chemical fiber wadding base with an addition-cured liquid silicone rubber with a Shore hardness of 15-70 degrees and then conducting curing.

4. The silicon silk wadding product according to claim 3, **characterized in that** the addition-cured liquid silicone rubber is a blend of vinyl silicone oil, a reinforcing material, hydrogen-containing silicone oil and platinum.

5. The silicon silk wadding product according to claim 4, **characterized in that** the operating viscosity of the addition-cured liquid silicone rubber when infiltrating the chemical fiber wadding base is less than or equal to 150 mPa.s.

6. The silicon silk wadding product according to claim 5, **characterized in that** the addition-cured liquid silicone rubber is diluted by a solvent or emulsified by water to the operating viscosity.

7. A preparation method of the silicon silk wadding product according to claim 1, **characterized by** comprising the steps of:
a, compressing or weaving chemical fibers into a required product shape first to obtain a chemical fiber wadding base;
b, diluting addition-cured liquid silicone rubber with a solvent or emulsifying the addition-cured liquid silicone rubber with water to obtain a silicone solution with a suitable operating viscosity, and then infiltrating the chemical fiber wadding base with the silicone solution to enable the silicone solution to uniformly enter the interior and exterior of a shaped chemical fiber wadding base; and
c, discharging the excess silicone solution in meshes by extrusion till only a proper amount of silicone adheres to the surfaces of the chemical fibers, then heating a product to evaporate the solvent or water, and curing and crosslinking the silicone to form a meshed elastic silicone layer.

8. The preparation method according to claim 7, **characterized in that** when the excess silicone solution is extruded and removed, a pressing roller extrusion method or die extrusion method is used.
